Europäisches Patentamt

European Patent Office

Office européen des brevets

(11) Veröffentlichungsnummer : **0 407 503 B1**

(12) **EUROPÄISCHE PATENTSCHRIFT**

(45) Veröffentlichungstag der Patentschrift :
**11.03.92 Patentblatt 92/11**

(21) Anmeldenummer : **89912391.3**

(22) Anmeldetag : **21.11.89**

(86) Internationale Anmeldenummer :
**PCT/CH89/00207**

(87) Internationale Veröffentlichungsnummer :
**WO 90/07101 28.06.90 Gazette 90/15**

(51) Int. Cl.$^5$ : **G01G 23/01**

(54) **Kriechgerechte Nullpunktsanzeige für ein Kraftmessgerät.**

(30) Priorität : **14.12.88 CH 4618/88**

(43) Veröffentlichungstag der Anmeldung :
**16.01.91 Patentblatt 91/03**

(45) Bekanntmachung des Hinweises auf die
Patenterteilung :
**11.03.92 Patentblatt 92/11**

(84) Benannte Vertragsstaaten :
**CH DE FR GB IT LI NL SE**

(56) Entgegenhaltungen :
**CH-A- 550 999**
**CH-A- 612 267**
**DE-A- 2 325 654**
**DE-B- 2 743 326**
**US-A- 4 412 298**
**US-A- 4 535 854**
**US-A- 4 691 290**

(73) Patentinhaber : **Wirth, Gallo Messtechnik AG**
**Sonnenbergstrasse 55**
**CH-8032 Zürich (CH)**

(72) Erfinder : **GALLO, Mario**
**Krönleinstr. 1**
**CH-8044 Zürich (CH)**
Erfinder : **WIRTH, Johannes**
**Sonnenbergstr. 55**
**CH-8032 Zürich (CH)**

(74) Vertreter : **Salgo, Reinhold Caspar, Dr.**
**Patentanwalt Aretshalde 160**
**CH-8607 Aathal (CH)**

EP 0 407 503 B1

## Beschreibung

Die vorliegende Erfindung betrifft ein Verfahren zum Betrieb eines Messgerätes für Kräfte und Massen mit numerischem Auswertegerät, welches mehrere Messbereiche und eine automatische Nullpunktskorrektur aufweist, und ein nach dem Verfahren arbeitendes Messgerät.

Solche Messgeräte sind bekannt; so z.B. aus der CH-PS 550 999 hinsichtlich der automatischen Nullpunktskorrektur und aus der DE-OS 27 43 326 hinsichtlich der mehreren Messbereiche.

Bei solchen bekannten Messgeräten erfolgt der Uebergang von einem Messbereich zum nächsten kraftabhängig und kraftgesteuert. Handelt es sich um ein Massenmessgerät, so wird die von der schweren Masse der Nutzlast bewirkte Kraft verglichen mit derjenigen von einer Vergleichsmasse erzeugten, womit die lokale Schwerebeschleunigung und allenfalls die Schiefstellung des Massenmessgerätes berücksichtigt werden.

Bei Messgeräten dieser Gattung, besonders in deren Ausführung als Handelswaagen, wird die Grösse der Anzeigestufe des angezeigten Resultats in Abhängigkeit vom Messbereich automatisch gewählt, wobei jedoch die im Auswertegerät intern verwendete Rechenstufe konstant bleibt, wie nachfolgende Tabelle im Sinne eines Beispiels zeigt:

### Tabelle I

| Lastbereich $L_j$ (kg) | Interne Rechenstufe m (g) | Anzeigestufe $d_j$ (g) |
|---|---|---|
| 0 : 10 | 0.1 | 10 |
| 10 : 20 | 0.1 | 20 |
| 20 : 50 | 0.1 | 50 |
| 50 : 100 | 0.1 | 100 |

Mit anderen Worten: Das Resultat wird stets mit den gleichen absoluten Rechenstufen (beispielsweise 0,1 g) ermittelt und dann, dem Lastbereich entsprechend, in gröberen Anzeigestufen angezeigt.

Soll ein solches Messgerät die Grösse einer Masse bestimmen, die in einen der oberen Lastbereiche fällt, so werden bestimmte Teile - Federn, Balken, Zug- oder Druckorgane - des Messgerätes verformt. Die elastische Verformung entsteht zur Hauptsache gleichzeitig mit der Belastung. Nennt man $\Delta S$ den kleinen, am Anfang noch fehlenden Teil der gesamten Einfederung, so wird die Endlage angestrebt beispielsweise nach der Form

$$\Delta S = \Delta S_o e^{-t/\tau}$$

Wobei die Zeitkonstante $\tau$ abhängig ist von der Art der Verformung, von Material und Temperatur. Diese Erscheinung ist bekannt und wird Kriechen genannt. Ferner sind plastische Verformungen sehr kleinen Ausmasses in Kauf zu nehmen.

Diesen Tatsachen wird konstruktiv und eichamtlich Rechnung getragen, indem die Grösse der jeweiligen Anzeigestufe in einer bestimmten Relation zur Maximallast des betreffenden Lastbereiches steht. Wird nun das obengenannte Messgerät wieder entlastet, so geht der Hauptteil der elastischen Verformung gleichzeitig zurück. Uebrig bleiben Kriech-Anteile und allenfalls kleine bis kleinste plastische Verformungen.

Würde nun die Reihe der Anzeigestufen weiter verfeinert, was aufgrund der internen Rechenstufen m möglich wäre, so hätte dies einerseits zur Folge, dass bei Teilentlastung des Messgerätes die neue Last in feineren Anzeigestufen dargestellt würde, das angezeigte Resultat jedoch wegen der Kriecherscheinungen seinen Endwert möglicherweise erst nach einiger Zeit - nämlich nach Abklingen des Kriechens - erreicht. Anderseits könnte das völlig entlastete Messgerät nicht "Null" anzeigen. Zwar fällt die wegen des Kriechens verbleibende Restlast sicher in den kleinsten Anzeigebereich, ist der Restverformung wegen jedoch nicht direkt null. Eine Folge von immer kleineren Zahlen würde angezeigt, die sich der Null immer mehr nähern, sie aber allenfalls nicht erreichen.

Die vorliegende Erfindung hat zur Aufgabe, ein Verfahren und ein Messgerät mit mehreren Anzeigestufen zu schaffen, das die erwähnten Nachteile nicht aufweist und das gestattet, den Bereich der Anzeigestufen in Richtung zu feineren hin zu erweitern, auch wenn die feinste Anzeigestufe feiner ist als der erwartete Null-Fehler nach der grösstmöglichen Belstung.

Die Lösung der gestellten Aufgabe ist gegeben im Patentanspruch 1 bezüglich des Verfahrens und im Patentanspruch 12 bezüglich des Messgerätes. Die Erfindung ist anhand der beiliegenden Zeichnung näher erläutert.

Es zeigen:

Fig. 1 eine schematische Darstellung der erfindungsgemässen Vorrichtung,

Fig. 2a,b grafische Darstellungen von typischen Kriechverhalten,

Fig. 3 ein erstes Ausführungsbeispiel des erfindungsgemässen Verfahrens, anhand der Kurve von Fig. 2a, in grafischer Darstellung,

Fig. 4 das Ausführungsbeispiel von Fig. 3 in Form eines Flussdiagramms,

Fig. 5 ein erstes Ausführungsbeispiel des Rechners der erfindungsgemässen Vorrichtung,

Fig. 6 ein zweites Ausführungsbeispiel des erfindungsgemässen Verfahrens anhand der Kurve von Fig. 2b in grafischer Darstellung,

Fig. 7 das Ausführungsbeispiel von Fig. 6 in Form eines Flussdiagrammes,

Fig. 8 ein zweites Ausführungsbeispiel des Rechners der erfindungsgemässen Vorrichtung,

Fig. 9 ein drittes Ausführungsbeispiel des erfindungsgemässen Verfahrens in Form eines Flussdiagrammes,

Fig. 10 ein Detail des Flussdiagrammes von Fig. 9.

Den nachfolgenden Ausführungsbeispielen liegt eine gegenüber Tabelle I erweiterte Tabelle II von Lastbereichen und Anzeigestufen zugrunde. Die Tabelle hält sich, im Sinne eines Beispiels, an die Stufungs-Systematik von Tabelle I. Auch die Erweiterung zu feineren Stufen ist als Beispiel gegeben.

## Tabelle II

| Lastbereich $L_j$ (kg) | Interne Rechenstufe $m$ (g) | Anzeigestufe $d_j$ (g) |
|---|---|---|
| 0 : 1 | 0.1 | 1 |
| 1 : 2 | 0.1 | 2 |
| 2 : 5 | 0.1 | 5 |
| 5 : 10 | 0.1 | 10 |
| 10 : 20 | 0.1 | 20 |
| 20 : 50 | 0.1 | 50 |
| 50 : 100 | 0.1 | 100 |

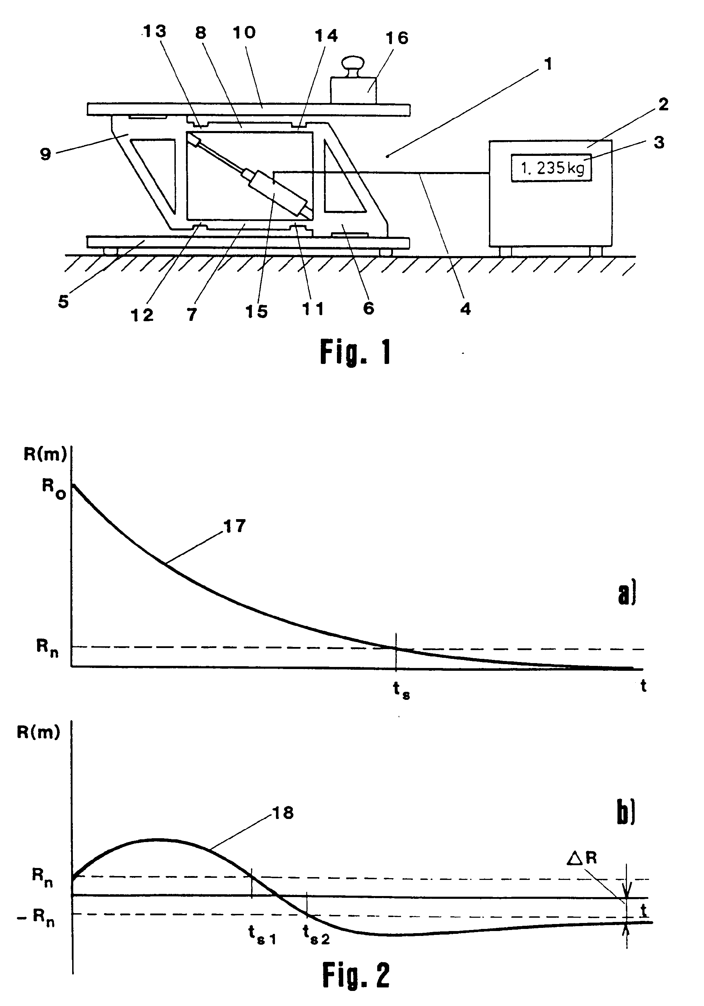

Fig. 1 zeigt eine schematische Darstellung eines erfindungsgemässen Messgerätes, bestehend aus einem Messteil 1 und einem zugehörigen Rechner 2 mit beispielsweise angebauter Anzeigevorrichtung 3. Verbunden sind Messteil 1 und Rechner 2 durch ein Mehrfachkabel 4. Der Messteil 1 - beispielweise nach der CH-Pantentanmeldung 03 040/87-4 (CH-A5-67353) veröffontbeht 15,3,90) - besteht aus einem auf einer Grundplatte 5 befestigten Gestell 6, das mittels zweier im wesentlichen parallelen Platten 7,8, einen Lastträger 9 trägt, an dem wiederum eine Waagschale 10 befestigt ist. Die Platten 7,8 weisen in der Querrichtung je zwei als Bandgelenke 11 bis 14 wirkende Nuten auf. Zwischen Lastträger 9 und Gestell 6 ist diagonal verlaufend - in der Fig. 1 von links oben nach rechts unten - der Kraftsensor 15 eingebaut. Die Gewichtskraft des Wägegutes, dargestellt durch einen Gewichtsstein 16, wirkt auf den Lastträger 9, von wo sie teilweise über die aus den Elementen 6 bis 9 und 11 bis 14 bestehende elastische Parallelführung direkt an die Grundplatte 5 abgeleitet wird; ein anderer - proportionaler - Teil wirkt, durch die Geometrie der Vorrichtung untersetzt , auf den Kraftsensor 15. Dieser gibt ein der auf ihn wirkenden Kraft entsprechendes elektrisches - analoges oder digitales - Signal über das Mehrfachkabel 4 an den-Rechner ab. Im Falle eines Analogsignales ist im Rechner 2 ein AD-Wandler vorgesehen. Mit dem Kraftsensor 15 verbunden ist ein (nicht gezeichneter) Temperaturfühler, der dem Rechner 2, ebenfalls über das Mehrfachkabel 4, die Temperatur des Messteils 1, insbesondere des Kraftsensors 15, übermittelt. Der Rechner 2 enthält die elektronischen Mittel, um die nachfolgend dargestellten Rechen- und Vergleichsoperationen auszuführen.

Die getrennte Darstellung von Messteil 1 und Rechner 2 ist nicht erfindungswesentlich. In vielen Anwendungsfällen wird es praktischer sein, Rechner 2 und Messteil 1 im gleichen Gehäuse unterzubringen oder auf der gleichen Grundplatte 5 zu befestigen.

Wird die Waagschale 10 vom Gewichtsstein 16 entlastet, so wirkt nicht sofort eine Kraft auf den Kraftsensor 15, die derjenigen der ursprünglich leeren Waagschale 10 entspricht, sondern nähert sich dieser kriechend. In Fig. 2 a,b sind, aus der Vielzahl von möglichen, zwei Kriechkurven dargestellt. Dabei können Exponentialfunktionen mit positiven und negativen Anteilen von in der Regel verschiedenen Zeitkonstanten summiert auftreten.

Fig. 2a zeigt den einfachen Fall, wo sich im wesentlichen nur das Kriechen eines Vorzeichens mit einer Zeitkonstanten $\tau$ äussert. Die Abszisse stellt die Zeit dar, die Ordinate das Messresultat R (m) in Rechenstufen m. Die Kurve 17 ist im wesentlichen vom Typ

$$R(m) = R(m)_o e^{-t/\tau}$$

Das durch Fig. 2 Illustrierte Verhalten ist hier konkret auf völliges Entlasten bezogen, spielt sich jedoch bei Teilentlasten in gleicher Weise ab. Was also für den Wert Null oder den Nullbereich gesagt wird, gilt analog für einen niedrigeren Lastwert, wenn das Messgerät vorher höher belastet war.

Kriecherscheinungen sind weitgehend laständerungsproportional und in aller Regel klein; so treten sie bei der Gewichtsbestimmung bei bekannten Messgeräten wegen der genannten lastabhängig beschränkten Anzeigegenauigkeit nicht in Erscheinung. Wird die Reihe der Anzeigebereiche einfach zu feineren hin fortgesetzt, entstehen im Nullbereich, wo keine äussere Last mehr wirkt oder nach teilweisem Entlasten, die Probleme, die mit der vorliegenden Erfindung gelöst werden sollen: Da die Anzeigegenauigkeit lastabhängig ist, ist sie im kleinsten Lastbereich - zu dem auch die leere Waage gehört - am feinsten. Dies würde im durch Fig. 2a dargestellten Fall dazu führen, dass die Waage nach Entlasten nicht sofort Null anzeigte, sondern eine im Mess- bzw. Anzeigetakt folgende Reihe von immer kleiner werdenden Zahlwerten, bis im Zeitpunkt $t_s$ der Schwellenwert $R_n$ für die Anzeige von Null in der kleinsten Feinheitsstufe erreicht und unterschritten würde.

Das Verhalten, das mit der Kurve 18 in Fig. 2b dargestellt ist, ist komplexer. Hier machen sich mehrere Kriechanteile bemerkbar; sie sind unterschiedlich sowohl im Vorzeichen als auch in ihren Zeitkonstanten. Auch geht R(m) nach langer Zeit nicht auf den Wert R(m) = 0 zurück, sondern es bleibt ein kleines 4 R zurück, das von einer kleinen plastischen Verformung einer Komponente des Messteils 1 herrührt.

Bei der Kurve 18 wird $R_n$, der Schwellenwert, nach der Zeit $t_{s1}$ unterschritten, folglich Null angezeigt. Nach der Zeit $t_{s2}$ ist jedoch R(m)< $-R_n$ , somit wird ein negativer Wert angezeigt. Da im Fall von Fig. 2b eine plastische Restverformung vorliegt, die grösser ist, als die Einheit der feinsten Anzeigestufe der Anzeigevorrichtung 3, bliebe ein Wert von beispielsweise -0.001 kg stehen.

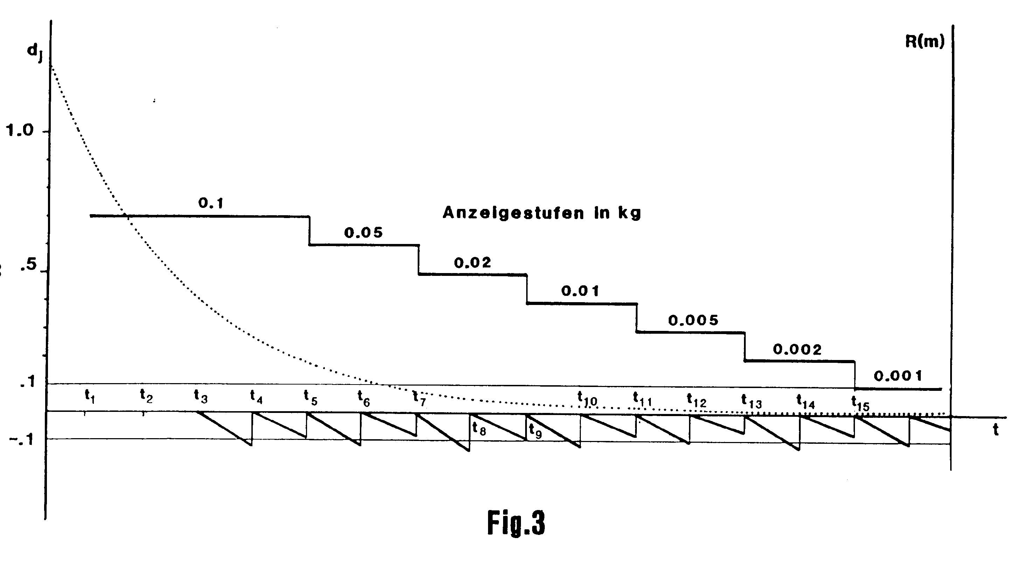

Anhand der Fig. 3,4,5 wird die Wirkungsweise eines ersten Ausführungsbeispiels des erfindungegemässen Verfahrens und des erfindungsgemässen Messgerätes dargestellt. Im Sinne eines Beispiels werden die in der vorstehenden Tabelle gegebenen Lastbereiche und zugehörigen Anzeigestufen verwendet. Selbstverständlich ist weder das Verfahren noch die Vorrichtung an diese beispielsweile verwendeten Zahlenwerte gebunden. Weiter wird vorausgesetzt, dass die Messergebnisse in einem festen zeitlichen Takt, beispielsweise einmal pro Sekunde ermittelt werden. Auch diese Voraussetzung ist nur beispielsweise gesetzt. Im Sinne der Erfindung sind ebenfalls variable Messzeiten.

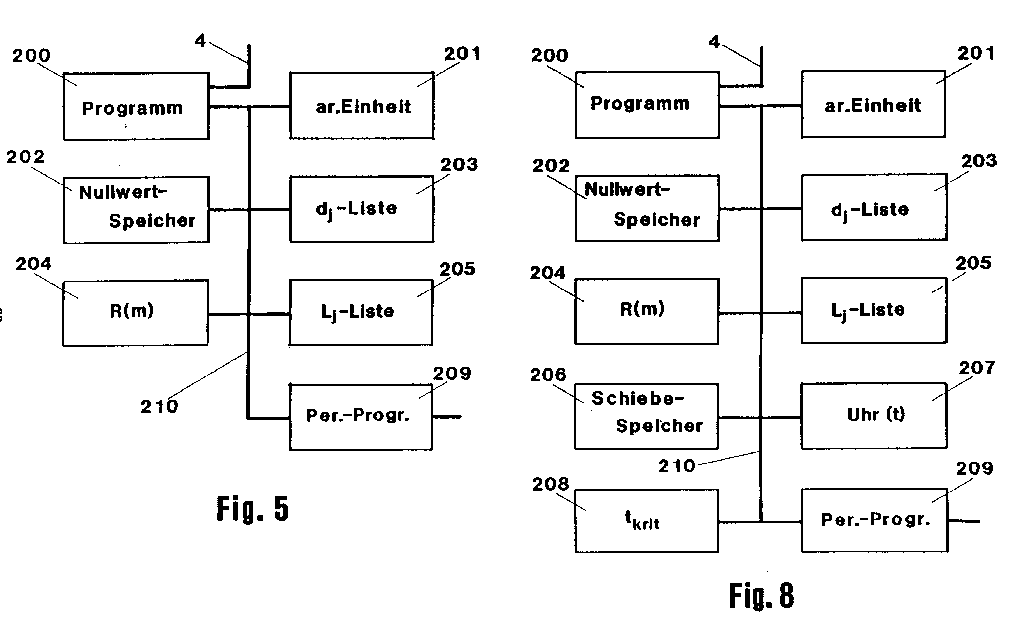

Da bei der Erläuterung des Verfahrens immer wieder auf die Vorrichtung Bezug genommen wird, sei zunächst auf die Fig. 5 eingegangen. Sie enthält die erfindungsgemässen Elemente des Rechners 2: Ein Element 200 enthält das Steuerprogramm des Rechners 2. Eine arithmetische Einheit 201 führt alle logischen und arithmetischen Operationen durch. Ein Nullwertspeicher 202, dessen Funktion im Zusammenhang mit dem Verfahren näher beschrieben ist, dient zur Speicherung des Messresultates R(m)* in Rechenstufen m, das dem unbelasteten Messgerät entspricht. Eine dj-Liste 203 ist der Speicher für die Reihe der Anzeigestufen dj, beispielsweise nach Tabelle II; eine Lj-Liste 205 ist der Speicher für die - jeden Messbereich nach oben beschränkenden - Maximallasten Lj. Ein Funktionsblock 204 erzeugt das Messresultat R(m)* in Rechenstufen m aus den von Kraftsensor 15 und allenfalls von einem Temperaturfühler über das Mehrfachkabel 4 übermittelten Signale. Sind die Signale vom Kraftsensor 15 nicht kraftproportional oder um einen Absolutwert gegenüber Null verschoben, so ist in der Arbeitsweise des Funktionsblockes 204 die Linearisierung und Absolutwertkorrektur inbegriffen. Ferner bildet der Funktionsblock 204 die Differenz aus dem letztermittelten Resultat R(m)* und dem im Nullwertspeicher 202 gespeicherten und stellt es als Resultat R(m) dar. Ein Element 209 enthält die Steuerprogramme allfälliger peripherer Anschlussgeräte.

Die Elemente 200, bis 205 und 209 des Rechners 2 sind durch eine Steuer- und Datenlinie 210 miteinander verbunden.

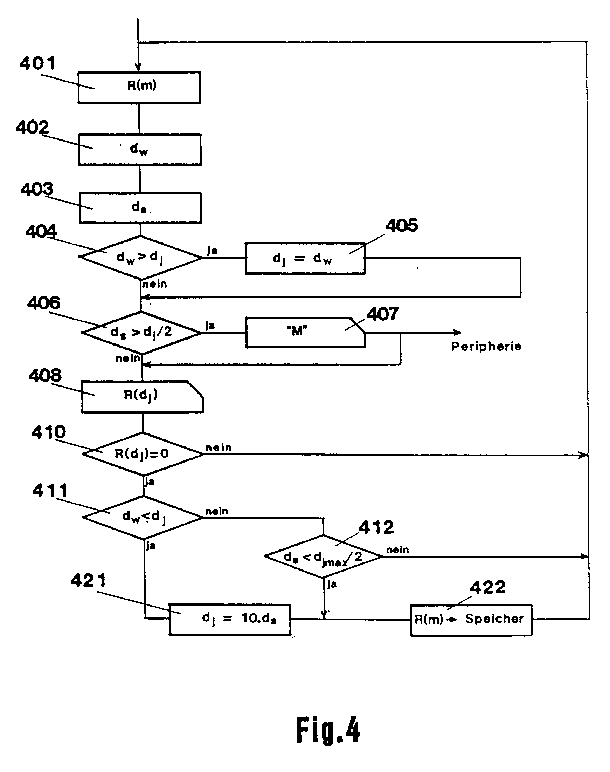

Ohne zunächst auf die Fig. 3,4 Bezug zu nehmen, wird das erfindungsgemässe Verfahren erst in mehr prinzipieller, dem ersten Ausführungsbeispiel entsprechender, Weise erläutert:

Ist die Waagschale 10 zunächst leer, so wird der entsprechende Wert R(m) aufgrund nachstehend beschriebener Kriterien als erster Nullwert interpretiert, festgelegt und im Nullwertspeicher 202 gespeichert. Die Anzeigevorrichtung 3 zeigt 0.000 kg. Die Angabe der Masseneinheit kg ist beispielsweise zu verstehen;

EP 0 407 503 B1

im angelsächsischen Raum wäre die Anzeige 0.000 lb, mit entsprechender Änderung der Rechen- und Anzeigestufen. Nun wird die Waagschale 10 belastet mit beispielsweise 80.0 kg. Auf der Anzeigevorrichtung 3 erscheint die Zahl

$$80.0(00) \text{ kg}$$

Die in Klammer gesetzten Nullen werden nicht angezeigt, da die der Last entsprechende Anzeigestufe $d_j$ = 0.1 kg ist. Das nach Belastung einsetzende Kriechen ist kleiner als die Anzeigestufe $d_j$; die Anzeige kann sich also höchstens um ± 0.1 kg ändern.

Nach Entfernen der Last bleibt der Rechner 2 zunächst in der Anzeigefeinheit 0.1 kg. Das erste Resultat $R(m)$ nach Entfernen der Last wird überprüft, ob es in den Bereich ± 0.5 d (hier $d_j$ = 0.1 kg) fällt.

Die Darstellung in Fig. 3 zeigt den zeitlichen Verlauf von $R(m)$ punktiert eingetragen; die zugehörige Abszisse ist rechts des Diagrammes. Die linke Abszisse - gültig für den durchgezogenen Kurvenverlauf ist $d_j$, also die jeweilig gültige Anzeigestufe.

Die erste Prüfung ergibt zunächst

$$R(m) > 0.5 \, d_j$$

erst bei $t_3$ gilt

$$R(m) < 0.5 \, d_j$$

Daraufhin wird der Wert $R(m)$ in den Nullwertspeicher eingelesen und die Differenz zum alten $R(m)^*$ als neuer Nullwert betrachtet; gleichzeitig also der Verlauf der punktierten Kurve um diese Nullpunktskorrektur nach unten verschoben.

Die Anzeigevorrichtung zeigt nun

$$0.0 \text{ kg}$$

Die nächste Prüfung besteht In der Feststellung der Aenderungsgeschwindigkeit

$$\frac{\Delta R(m)}{\Delta t}$$

Wird mit konstanter Länge der Messperiode gearbeitet, so reduziert sich die Feststellung auf ein bestimmtes

$$\Delta R(m) = R(m)_k - R(m)_{k-1}$$

Wobei k sich auf das aktuelle, k-1 sich auf das vorangehende Resultat bezieht.

Bei lastabhängig oder nach weiteren möglichen Kriterien variabler Dauer der Messperiode wird das so festgestellte $\Delta R(m)$ entsprechend variiert. Im Sinne obiger Gleichung wird nun geprüft, ob

$$\Delta R(m) < d_j/10$$

Die Zahl 1/10 ist wiederum als Beispiel genannt. Hinsichtlich der Stufung der Anzeigeeinheiten muss sie lediglich <1/2.1/2 oder <1/2.1/2.5, vorsichtigerweise also <1/5 sein.

Das genannte Kriterium trifft nach der ersten Messperiode nicht zu; es bleibt also bei der Anzeige

$$0.0 \text{ kg}$$

Der Messwert $R(m)$ ist weiter gesunken, erfüllt aber bei $t_4$ wiederum das Kriterium

$$R(m) < 0.5 \, d_j$$

mit

$$d_j = 0.1 \text{ kg};$$

Der Nullwertspeicher wird wieder aufdatiert, das angezeigte Resultat bleibt Null. Der Vorgang ist repetitiv. Erst bei $t_5$ gilt

$$\Delta R(m) < d_j/10$$

immer noch mit $d_j$ = 0.1 kg.

Nun wird wieder genullt, zugleich aber die nächstfeinere Anzeigestufe mit

$$d_j = 0.05 \text{ kg}$$

gewählt.

Das Nullsetzungskriterium ist fortan immer erfüllt; das Kriterium für die Wahl der nächstfeineren Anzeigestufe ist erst wieder bei $t_7$, wo

$$d_j = 0.02 \text{ kg};$$

dann wieder bei $t_9$ mit

$$d_j = 0.01 \text{ kg},$$

bei $t_{11}$ mit

$$d_j = 0.005 \text{ kg},$$

bei $t_{13}$ mit

$$d_j = 0.002 \text{ kg}.$$

Die feinste Anzeigestufe von 0.001 kg wird erreicht bei $t_{15}$ mit

$$d_j = 0.001 \text{ kg}.$$

Die Anzeige

5

$$0.000 \text{ kg}$$

wird bereits bei $t_{11}$ erscheinen, da von da ab die Feinheit der Anzeige in der letzten Stelle liegt. Eine allfällige plastische Verformung wird gleichzeitig mit den elastischen Restverformungen berücksichtigt und tritt nie gesondert in Erscheinung.

Fig. 4 zeigt das oben erläuterte Verfahren in Form eines Flussdiagrammes.

Beim Einschalten des Gerätes findet zunächst ein Initialisierungsvorgang statt. Solche Initialisierungen sind jedoch Stand der Technik und werden als bekannt vorausgesetzt. Die in den Fig. 4,7,9 und 10 verwendeten Symbole sind: Rechtecke für arithmetische Operationen, Rechtecke mit abgeschnittener Ecke für input/output-Funktionen, und Rauten stellen Entscheidungsoperationen dar; gesamthaft werden alle "Operationen" genannt und durchnumeriert.

Aus dem vom Kraftsensor 15 gelieferten Signal bildet eine Operation 401 das allenfalls linearisierte und temperaturkompensierte und um den Inhalt des Nullwertspeichers 202 verminderte Resultat R(m) in Rechenstufen m.

Anschliessend wird - im Sinne einer Initialisierung - die feinste Anzeigestufe als die vorderhand gültige gesetzt, also $d_j = d_{jfeinst}$. Eine anschliessende Operation 402 definiert die wahre Feinheit des Resultates mit

$$d_w \geqq R(m)/1000$$

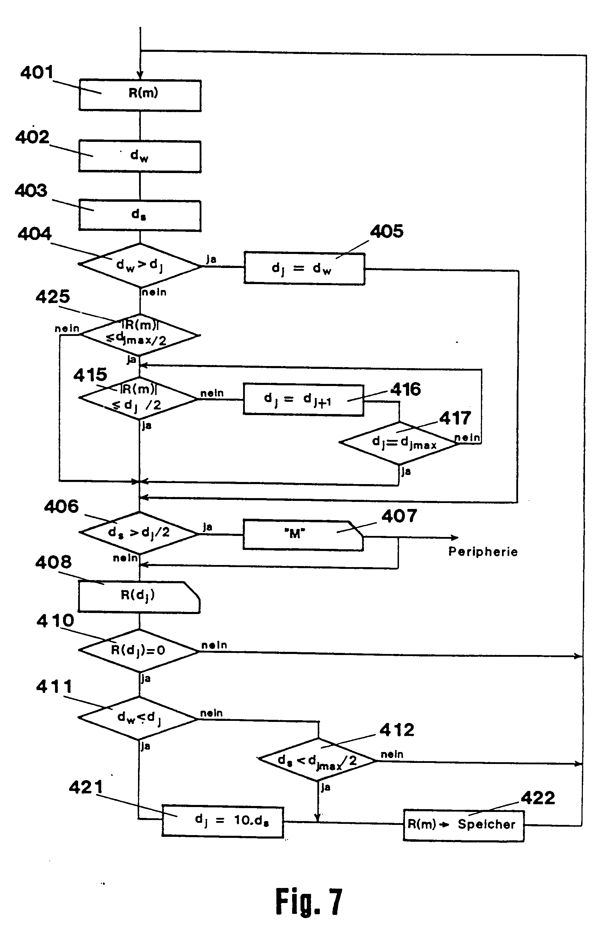

Die Grösse $d_w$ wird aus der gleichen Liste genommen, wie die $d_j$, die somit im mit 203 bezeichneten Element aus Fig. 7 gespeichert ist. Die obenstehende Definition von $d_w$ bedeutet: Es ist das kleinstmögliche $d_w$ aus der $d_j$ -Liste 203 auszuwählen, das die genannte Bedingung erfüllt.

Der Operation 402 ist eine Operation 403 nachgeschaltet, die das aktuelle $(R(m)_k)$ mit dem vorangehenden $(R(m)_{k-1})$ Messresultat vergleicht. Der Absolutbetrag der Differenz der genannten Messwerte wird ermittelt. Darauf wird aus der genannten $d_j$-Liste 203 derjenige Wert ausgesucht, auf den dieser Absolutbetrag aufgerundet werden kann; dieser Wert wird mit $d_s$ definiert.

In einer ersten Entscheidungs-Operation 404 wird untersucht, ob die wahre Stufung $d_w$ grösser sei als die initialisierte. Trifft dies zu, so wird in einer Operation 405 der Wert von $d_w$ an die Stelle des Wertes $d_j$ gesetzt; sonst wird direkt bei einer Operation 406 fortgefahren.: Im nachfolgenden Schritt untersucht die Operation 406, ob

$$d_s > d_j/2.$$

Sofern dies zutrifft, kann in der Anzeigevorrichtung 3 ein entsprechendes Zeichen - beispielsweise eine M - gezeigt werden, was mit einer Operation 407 versinnbildlicht ist, in welcher das Wort "Motion" (für Bewegung) erscheint. Weiter wird beispielsweise an periphere Geräte, wie Datendrucker, Beschickungsvorrichtungen, ein inhibit-Signal abgegeben, das die Betätigung des entsprechenden Peripheriegerätes verhindert. Danach wird das Resultat $R(d_j)$ angezeigt (Operation 408); angezeigt wird es auch im Falle

$$d_s < d_j/2,$$

nur unterbleibt dabei das inhibit-Signal. Eine Operation 410, die anschliessend folgt, überprüft, ob das Resultat in Anzeigeeiheiten $d_j$ $R(d_j) = 0$ angezeigt wurde. Ist dies nicht der Fall (dh. entweder wird real etwas gewogen, oder das Messgerät ist eben entlastet worden, ohne auf null gekommen zu sein), so beginnt der mit Operation 401 anfangende Zyklus erneut. Wurde tatsächlich Null angezeigt, so überprüft eine anschliessende Operation 411, ob

$$d_w < d_j$$

Zur Erläuterung des Flussdiagrammes, sollen zwei mögliche Fälle damit untersucht werden.

1. Das Messgerät ist beispielsweise mit 80.000 kg belastet und wird anschliessend bis auf 4,800 kg entlastet,

Beim ersten Durchgang nach der Initialisierung ist $d_j = 1g$ (gemäss Tabelle II); in der Operation 402 wird bestimmt, dass $d_w = 100g$; $d_s$ ist zunächst uninteressant, In Operation 404 wird auf Operation 405 verzweigt (da $d_w > d_j$) und neu $d_j = 100g$ ersetzt, Da die Last ruhig ist, ist sicher $d_s < 50g$; das Verfahren geht zur Operation 408, und es werden

$$80.0 \text{ kg}$$

angezeigt, Operation 410 verzweigt auf Operation 401 zurück.

Wird nun das Messgerät bis auf 4.8 kg entlastet, so wird in Operation 402 $d_w$ neu festgelegt zu

$$d_w = 5g \text{ (siehe Tabelle II)}.$$

Da aber immer noch

$$d_j = 100g$$

gilt, läuft das Verfahren bei Operation 406 weiter. Die Ruhebedingungen sollen nicht geändert werden, daher wird durch Operation 408 bewirkt, dass

$$4.8 \text{ kg}$$

angezeigt werden; die Anzeigestufe ist immer noch $d_j = 100g$: Der beim Entlasten einsetzende Kriechvorgang ist in der Anzeige nicht sichtbar.

2. Das Messgerät ist wiederum mit 80.0 kg belastet und soll anschliessend gänzlich entlastet werden: Der Vorgang, der zur Anzeige von

$$80.0 \text{ kg}$$

führt, ist derselbe, wie oben beschrieben. Nun wird entlastet, und gemäss der Operation 401 wird durch den Funktionsblock 204 (Fig. 5) beispielsweise als erstes Resultat unmittelbar nach dem Entlasten

$$R(m) = 0.3842 \text{ kg}$$

festgestellt. Die Operation 402 bildet daraus

$$d_w = 0.001 \text{ kg};$$

Da d sich nicht geändert hat (0.100 kg), verzweigt die Operation 404 auf Operation 406. Das erste ermittelte $d_s$ wird annähernd 80 kg ausmachen; es ist also $d_s > d_j/2$. Es wird dann beispielsweise ein "M" in der Anzeigevorrichtung 3 gezeigt und periphere Geräte, wie Datendrucker oder Beschickungsvorrichtungen u. dgl., werden an der Verarbeitung des Resultates gehindert.

Da $R(m) > d_j/2$, konkret also 0.3842>0.050, wird das Resultat $R(d_j) = 0.4$ angezeigt, und Operation 410 verweist auf Operation 401 zurück.

Beim nächsten Messzyklus sei beispielsweise das Resultat auf 0.0403 kg abgeklungen; $d_j$ ist immer noch 0.1 kg; $d_w = 0.001$ kg; $d_s = d_{smax} = 0.1$ kg ($\Delta R(m) = 0.3842 - 0.0403 = 0.3439$ kg). Damit wird in Operation 406 immer noch auf Operation 407 verzweigt, aber in Operation 408 bereits $R(d_j) = 0.0$ angezeigt. Operation 411 verzweigt nun nach einer Operation 421, die ein neues $d_j$ definiert. Da aber sowohl $d_j$ als auch $d_s$ auf ihren Maximalwerten sind, bleibt auch Operation 421 unwirksam, und $d_j$ bleibt 0.1 kg.

Ergebe die folgende Messung $R(m) = 0.0363$, so werden $d_w = 0.001$ kg, $d_s = 0.005$ kg, $d_j = 0.1$ kg.

Nun wird, nachdem der Zyklus bis Operation 411 durchlaufen wurde, wie beschrieben, in Operation 421 neu gesetzt $d_j = 10 \cdot d_s = 0.05$ kg. Diese Schleife wiederholt sich, bis $d_j = 0.001$ kg. Erst dann verzweigt Operation 411 auf eine Operation 412, in der untersucht wird, ob gilt: $d_s < d_{jmax}/2$. Diese Prüfung verzweigt nur dann nicht auf Operation 422, wenn eine neue Messung einer von Null verschiedenen Kraft vorgenommen wird.

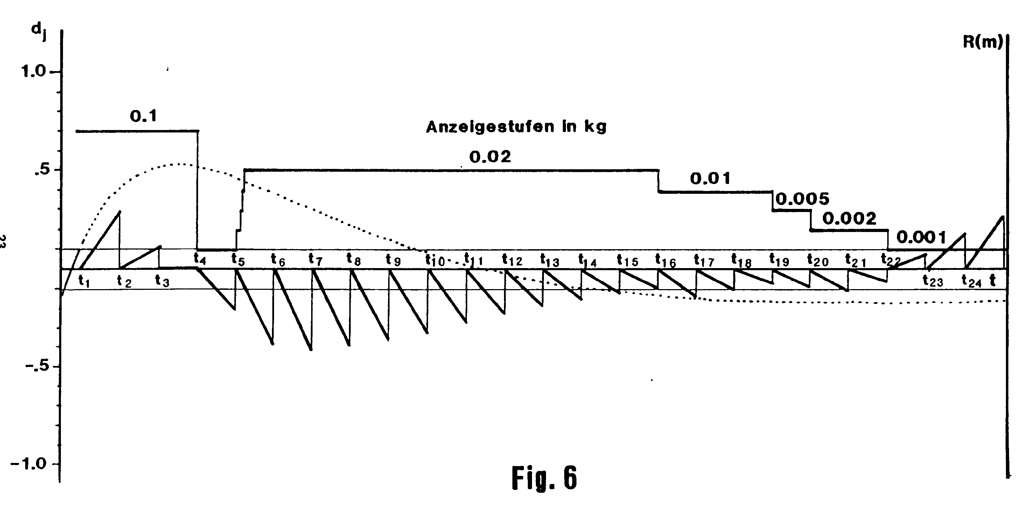

Verläuft das Kriechen, wie in Fig. 2b gezeigt, so ergibt sich das anhand von Fig. 6 erläuterte Verfahren: Hach Entlasten der Waagschale 10 von der Last von beispielsweise 80.0 kg, ergäben sich aufgrund der Kriecherscheinungen zunächst negative Messwerte. Bei $t_1$ ist die - die Messwerte $R(m)$ darstellende - punktierte Kurve bei einem kleinen positiven Wert angekommen. Das Null-Kriterium ($R(m) < 0.5 \, d_j$) ist erfüllt, es wird genullt; hingegen besteht kein Anlass zu einer feineren Anzeige überzugehen, da

$$\Delta R(m) > 0,1 \, d_j.$$

Die Messperiode zwischen $t_3$ und $t_4$ ergibt ein $R(m) \ll d_{jfernst}$.

Daraufhin wird das Kriterium

$$\Delta R(m = <0.1 \, d_j$$

sooft abgefragt, bis es nicht mehr zutrifft; jedesmal wird dabei d um eine Stufe verfeinert. Bei $t_4$ trifft also

$$R(m) < 0.001 \text{ kg}$$

zu; daher wird 0.000 kg angezeigt. Wegen des Verlaufs der Kurve $R(m)$ nehmen die sukzessiven Messwertdifferenzen wieder zu. Schon die erste Differenz $\Delta R(m)$ ist zu gross für das Null-Kriterium. Daher geht der Rechner 2 die Reihe der $d_j$ rückwärts, bis wiederum

$$\Delta R(m) < d_j/2,$$

hier also bis $d_j = 0.02$ kg. Das weitere Verfahren ist wie zu Fig. 3 erläutert.

Der Rechenzyklus ist viel kürzer als eine Messperiode. Die Darstellung des stufenförmigen Anstieges durch die $d_j$ nach $t_5$ ist nur der Klarheit halber so ausgedehnt gezeichnet.

Der Ablauf des erfindungsgemässen Verfahrens ergibt sich aus Fig. 7. Diese beruht auf der Fig. 4. Zwischen die Operation 404 und 406 sind vier Operationen 425, 415, 416, 417 eingeschoben. Hier wird die Aufgabe gelöst, bei Resultaten, die zwar im Nullbereich liegen, deren Differenzen $d_s$ aber von kleinen Werten wieder anwachsen, die Anzeigestufe $d_j$ allenfalls anzupassen. Operation 425 untersucht, ob das Resultat $R(m)$ überhaupt im Nullbereich liegt; falls nicht, werden die folgenden Operationen 415, 416, 417 übersprunger; das Verfahren wird bei Operation 406 fortgesetzt, wie beschrieben. Liegt $R(m)$ tatsächlich im Nullbereich, so kommen die Operationen 415 bis 417 zum Zuge: Operation 415 prüft, ob das Resultat immer noch im Nullbereich der aktuellen Anzeigestufe liegt; falls ja, wird auf Operation 406 verzweigt; das Verfahren läuft wie zu Fig. 4 beschrieben weiter. Falls nein, wählt Operation 416 aus den $d_j$-Werten den nächsthöheren aus; die anschliessende Operation 417 überprüft, ob $d_j = d_{jmax}$. Falls nein, wird wieder an Operation 415 zurückverwiesen, und die erwähnte Nullbedingung erneut abgefragt. Falls tatsächlich $d_j = d_{jmax}$, verweist dann eventuell Operation 412 direkt an Operation 401 und an eine neue Messung zurück. In einer nicht gezeichneten Variante in Fig. 7 wird in der Reihe der $d_j$ nur soweit wieder zurückgegangen bis zu demjenigen $d_j$, das der eben gemessenen Last entspricht.

Der Rechner 2 kann mit den in Fig. 5 gezeigten Elementen auch das erweiterte Verfahren ausführen; lediglich das in Element 202 gespeicherte Steuerprogramm muss geändert werden.

7

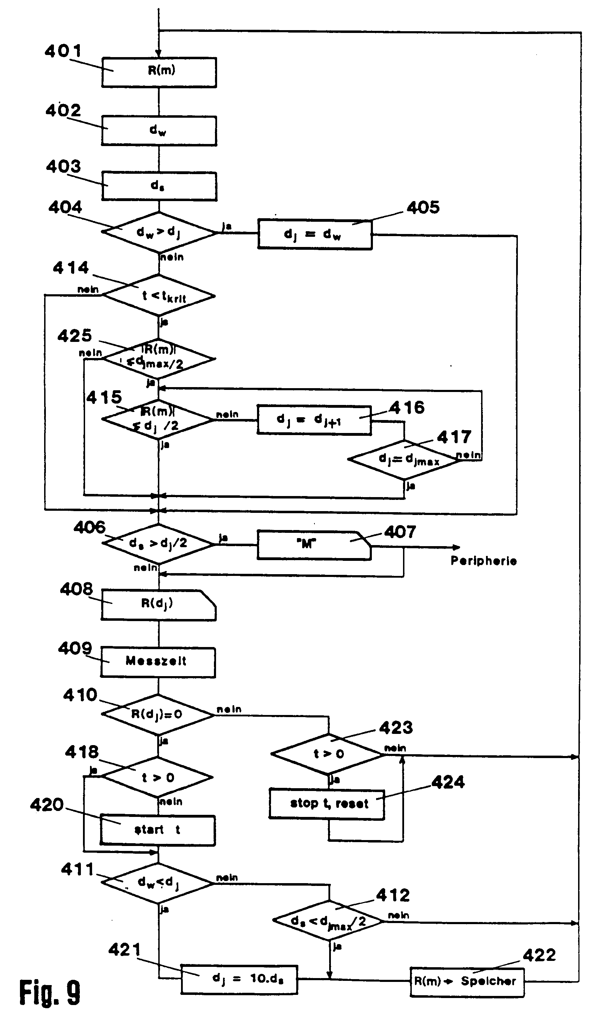

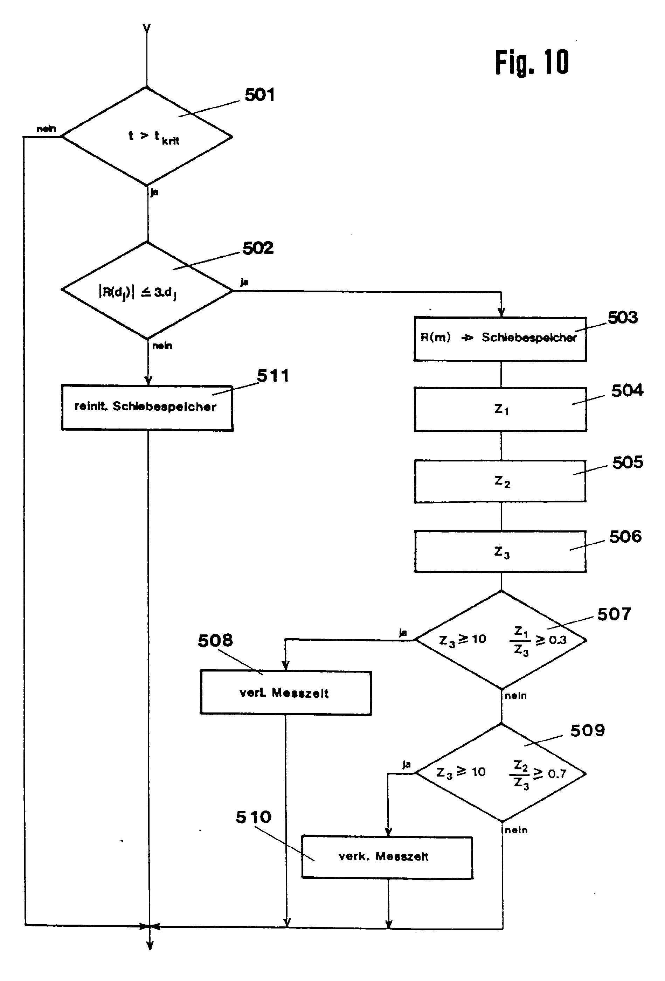

Das dritte Ausführungsbeispiel ist hinsichtlich der Vorrichtung in Fig. 8, hinsichtlich des Verfahrens in den Fig. 9 und 10 dargestellt.

Das bisher geschilderte Verfahren beruht auf der Annahme von absoluter Ruhe des Fundamentes des Messgerätes und der Abwesenheit jeglichen Rauschens irgendwelcher Herkunft. Diese Voraussetzungen treffen in der Realität des täglichen Einsatzes des Messgerätes in der Regel nicht zu: Es treten transiente oder periodische Störungen auf. Um zu verhindern, dass die Nullanzeige in der Stellenzahl variiert und/oder von Null verschiedene Messresultate gezeigt werden, die ihren Ursprung in solchen Störungen haben, kann eine weitere Strategie hinzutreten: Befindet sich der Rechner Im Nullbereich, so speichert er immer beispielsweise zehn Messresultate R(m). Sind unter diesen zehn Messresultaten drei, - ebenfalls im Sinne eines Beispiels - bei denen nicht Null angezeigt werden könnte, so wird die Messzeit verlängert, beispielsweise auf den doppelten Wert. Ergibt sich auf der nun verlängerten Messzeit wiederum das gleiche Resultat, so wird sie wiederum verdoppelt. Diese sukzessive Verdoppelung kann mehrfach vorgenommen werden. Damit besteht eine grosse Wahrscheinlichkeit, transiente Störungen auszumitteln, und die Gefahr einer flackernden Anzeige ist wesentlich reduziert.

Der Uebergang wieder zu kürzeren Messzeiten wird bewirkt, wenn bei den letzten zehn Messungen (nun auf der verlängerten Messzeit) die Messwerte R(m) innerhalb des Bereiches $\pm\frac{0.5d_j}{2}$ liegen.

Der Uebergang in diese Strategie der Messzeitverlängerung wird gestattet, wenn nach dem ersten Resultat $R(d_j) = 0$ eine gewisse, voreingestellte kritische Zeit $t_{krit}$ abgelaufen ist.

Der in Fig. 8 dargestellte Rechner 2 erfährt daher gegenüber der Fig. 5 einige Erweiterungen, nämlich um einen Schiebespeicher 206, eine Uhr 207, einen Festspeicher 208 für die kritische Zeit $t_{krit}$.

Der oben erwähnte Begriff: "Die zehn letzten Messungen" ist als die "jeweils vergangenen zehn" zu verstehen in dem Sinne, dass die Messwerte in den Schiebespeicher 206 eingelesen werden, der eine Kapazität von zehn Messresultaten aufweist. Das Einlesen eines neuen Messwertes bewirkt gleichzeitig den Verlust des ältesten.

Das Verfahren gemäss Fig. 9 ist gegenüber jenem von Fig. 7 um jene Schritte erweitert, bei denen die Zeitmessung und der Vergleich mit der kritischen Zeit wirksam sind, und jene, bei denen über die Dauer der Messzeit entschieden wird.

Gegenüber Fig. 7 ist die Fig. 9 um folgende Operationen vermehrt worden:

Eine Operation 414 zwischen Operation 404 und 415 prüft den Ablauf der Zeit; falls $t < t_{krit}$ werden die Operationen 415 bis 417 übersprungen. Falls die Uhr 207 noch gar nicht in Gang gesetzt wurde, bedeutet dies $t=0 < t_{krit}$. Diese Umgehungsschlaufe verhindert, dass die Anzeigestufe vergröbert wird nach Ablauf der kritischen Zeit.

Nach der Anzeige durch Operation 408 wird bedingungslos zu einer Operation 409 Übergegangen, in der über die Dauer der anschliessenden Messzeit entschieden wird. Der Inhalt von Operation 409 ist in Fig. 10 gesondert dargestellt und wird anschliessend erläutert.

Nach Operation 410 folgt - für den Fall, dass $R(d_j) = 0$ - eine Prüfung durch eine Operation 423, ob die Uhr 207 läuft. Falls ja, wird sie durch eine Operation 424 stillgelegt und auf Null zurückgestellt. Anschliessend wird auf Operation 401 zurückverwiesen. Falls die Uhr 207 steht (t = 0). erfolgt dieser Verweis direkt.

War das letztangezeigte Resultat im Nullbereich, so verweist die Operation 410 auf eine Operation 418, die die gleiche Prüfung vornimmt, wie Operation 423. Falls die Uhr 207 steht, wird sie durch eine nachfolgende Operation 420 in Gang gesetzt, andernfalls wird direkt auf die bekannte Operation 411 übergegangen.

Fig. 10 zeigt nun den Verfahrensschritt Operation 409 aus Fig. 9 im Detail. Eine Operation 501 nimmt eine zur Operation 414 analoge Prüfung vor; ist die kritische Zeit überschritten, so wird auf eine Operation 502 verwiesen, andernfalls findet das Verfahren bei Operation 410 gemäss Fig. 9 seine Fortsetzung. Operation 502 stellt ein gelockertes Null-Kriterium dar, das der Möglichkeit von transienten oder periodischen Störungen mit Rausch-Charakter Rechnung trägt. Falls die angzeigten Resultate diesem Kriterium genügen, wird das Verfahren mit anschliessenden Operationen 503 bis 510 fortgesetzt. Andernfalls wird der Schiebespeicher 206 gemäss Fig. 8 reinitialisiert und damit für die Verfahrensschritte von Operation 503 bis 510 erneut vorbereitet:

Operation 503: bewirkt das Einlesen des Resultates in den Schiebespeicher 206.

Operation 504: Die Anzahl $Z_1$ der im Schiebespeicher 206 befindlichen Resultate R(m) wird festgestellt, die der Bedingung von Operation 415 nicht genügen, also nicht genullt werden könnten.

Operation 505: Die Anzahl $Z_2$ der Resultate R(m), die der genannten Bedingung genügen, wird festgestellt.

Operation 506: Ermittle die Anzahl $Z_3$ der im Schiebespeicher 203 befindlichen Resultate R(m)

Operation 507: Simultanes Zutreffen der Kriterien $Z_3 \geqq 10$ und $\frac{Z_1}{Z_3} \geqq 0.3$

Die Zahlen 10 bzw. 0.3, bzw. 0.7 sind beispielsweise zu verstehen. Je nach Einsatzbereich des erfindungs-

EP 0 407 503 B1

gemässen Messgerätes können andere Werte vorgesehen werden.

Ist das Kriterium von Operation 507 unwahr, was beim ersten Durchgang sicher zutrifft, so prüft eine Operation 509, ob simultan

$$Z_3 \geqq 10 \text{ und } \frac{Z_2}{Z_3} \geqq 0.7$$

Im unzutreffenden Fall wird auf die Operation 410 von Fig. 9 übergegangen. Trifft das Kriterium von Operation 507 nach mehreren Messzeiten (und damit Durchgängen durch die Operation 409) zu, so wird durch eine Operation 508 die Messzeit verlängert, beispielsweise verdoppelt. Sind später genügend Resultate R(m) im Nullbereich. so wird die Operation 509 wahr, und die Messzeit wird wieder halbiert, sofern sie vorher verdoppelt wurde. Allgemeiner gesprochen: Sie wird um den Faktor F verkürzt, wenn sie vorher um den Faktor F verlängert wurde.

Wurde das Verfahren bei Operation 507 mehrfach auf Operation 508 verzweigt, so findet die Verlängerung der Messzeit um den Faktor F mehrfach statt; analoges gilt bei der Verzweigung auf Operation 510 für die Verkürzung der Messzeit.

## Patentansprüche

1. Verfahren zum Betrieb eines Messgerätes für Kräfte und Massen mit numerischem Auswertegerät, welches mehrere Messbereiche und eine automatische Nullpunktskorrektur aufweist, bei welchem das Messgerät immer in gleichen Rechenstufen m, jedoch in messbereichsabhängigen Anzeigestufen $d_j$ dargestellt wird, dadurch gekennzeichnet, dass
   – in einer ersten Operation (401) die Signale des Kraftsensors (15) zu einem um den Inhalt des Nullwertspeichers (202) verminderten Resultat R(m) in Rechenstufen m aufgearbeitet werden,
   – in einer nachfolgenden Operation (402) dieses Resultat der zugehörigen Anzeigestufe $d_j$ zugeordnet wird, entsprechend dem Lastbereich $L_j$,
   – bei Vorliegen eines von null verschiedenen Resultates R(m) dieses in der zugehörigen Anzeigestufe $d_j$ dargestellt wird,
   – nach teilweisem Entlasten des Messgerätes die gröbste erreichte Anzeigestufe $d_j$ beibehalten wird,
   – bei Vorliegen eines Resultates R(m), das in einen Nullbereich fällt, dieses Resultat R(m) als Null interpretiert und der Nullwertspeicher (202) durch dieses Resultat R(m) aufdatiert wird,
   – die Feinheit der Anzeige Null bestimmt wird durch die Grösse der Differenz aufeinanderfolgender und in den Nullbereich fallender Resultate $| R(m)_k - R(m)_{k-1} |$.
2. Verfahren zum Betrieb eines Messgerätes für Kräfte und Massen nach Patentanspruch 1, dadurch gekennzeichnet, dass
   – vor der ersten Messung die feinste Anzeigestufe als die vorderhand gültige initialisiert wird,
   – eine nachfolgende Operation (402) die wahre Anzeigestufe $d_w$ als die kleinstmögliche festgelegt wird, die der Beziehung:
   $d_w \geqq R(m)/1000$ genügt, wobei das $d_w$ der im Speicher (203) gespeicherten Liste der $d_j$ entnommen wird,
   – eine Operation (403) die Differenz bildet aus dem aktuellen (k) und dem diesem vorangehenden (k-1) Messwerte und daraus das kleinstmögliche $d_s$ bestimmt, das der Beziehung:
   $d_s \geqq | R(m)_k - R(m)_{k-1} |$ genügt, wobei das $d_s$ der im Speicher (203) gespeicherten Liste $d_j$ entnommen wird,
   – in einer darauffolgenden Operation (404) geprüft wird, ob $d_w > d_j$, worauf im zutreffenden Falle in einer Operation (405) ein neues $d_j$ definiert wird, welches aus der Beziehung $d_j = d_w$ folgt, und sowohl im zutreffenden Fall, als auch im unzutreffenden Fall das Verfahren bei einer Operation (406) seinen Fortgang nimmt,
   – in der Operation (406) die Ruhebedingung $d_s > d_j/2$ überprüft wird, worauf gemäss einer Operation (407) eine die herrschende Unruhe anzeigende Information erzeugt, allfällige periphere Verarbeitung des Resultates unterdrückt und sowohl bei Einhaltung als auch bei Verletzung der Ruhebedingung von Operation (406) das Resultat R($d_j$) in einer Operation (408) dargestellt wird,
   – eine anschliessende Operation (410) das dargestellte Resultat R($d_j$) in Anzeigestufen $d_j$ darauf prüft, ob es null ist und im Verneinungsfall mit Operation (401) die nächste Messung dem Verfahren unterwirft, im bejahenden Falle hingegen in einer Operation (411) geprüft wird, ob $d_w < d_j$, und wenn dies zutrifft, in einer Operation (421) eine neue Anzeigestufe definiert wird nach der Beziehung $d_j = 10 \cdot d_s$, wenn aber $d_w \geqq d$ ist, in einer Operation (412) die Unruhe des Messgerätes nocheinmal untersucht wird, - hier nach der Beziehung $d_s < d_{jmax}/2$ - wobei im bejahenden Falle das Verfahren an derselben Stelle weiterführt, wie nach Operation (421), im verneinenden Falle mit Operation (401) die nächste Messung dem Verfahren unterwirft,

– eine Operation (422) nach der durchgeführten Operation (421) und bestandenen Ruheprüfung von Operation (412) das den neuen Nullwert darstellende Resultat R(m) dem Nullwertspeicher (202) zur Weiterverarbeitung zuführt, worauf mit Operation (401) die nächste Messung dem Verfahren unterworfen wird.

3. Verfahren zum Betrieb eines Messgerätes für Kräfte und Massen nach Patentanspruch 1, dadurch gekennzeichnet, dass die für das Resultat $R(d_j)$ im Nullbereich verfahrensmässig gewählte Anzeigestufe $d_j$ wieder vergröbert wird, wenn das Resultat die Schranken des durch $d_j/2$ gegebenen aktuellen Nullbereichs überschreitet.

4. Verfahren zum Betrieb eines Messgerätes für Kräfte und Massen nach Patentanspruch 3, dadurch gekennzeichnet, dass

– im Ablauf des Verfahrens zusätzliche Operationen (425, 415, 416, 417) vorgenommen werden, wobei diese nur dann zum Zuge kommen, wenn in der Operation (404) festgestellt wird, dass $d_w \leq d_j$,

– die Operation (425) überprüft, ob das Resultat $R(m) \leq d_{jmax}/2$, also ob es überhaupt im Nullbereich liegt, und falls nicht, das Verfahren an Operation (406) verweist, bei Zutreffen hingegen auf Operation (415),

– die Operation (415) das Resultat darauf prüft, ob die Nullbedingung des aktuellen Nullbereiches $|R(m) \leq d_j/2|$ zutrifft, und im bejahenden Falle das Verfahren bei Operation (416) fortgesetzt wird, im verneinenden Falle in Operation (416) die Anzeigestufe um eine Stufe vergröbert wird, anschliessend die Operation (417) untersucht, ob bereits die gröbste Anzeigestufe aktiv ist, im unzutreffenden Falle die Prüfung von Operation (415) erneut vorgenommen wird, bis entweder Operation (415) auf Operation (406) verzweigt, oder die gröbste Anzeigestufe aktiv geworden ist, worauf Operation 417 ebenfalls auf Operation (406) verweist.

5. Verfahren zum Betrieb eines Messgerätes für Kräfte und Massen nach Patentanspruch 3, dadurch gekennzeichnet, dass

– nach Ablauf einer voreingestellten und gespeicherten Zeit $t_{krit}$ eine vorgewählte Anzahl $Z_3$ von aufeinanderfolgenden letzten Resultaten, die eine gelockerte Nullbedingung erfüllen, daraufhin geprüft werden, ob eine bestimmte Anzahl $Z_1 < Z_3$ von ihnen die ursprüngliche Nullbedingung verletzt hat, worauf dann; wenn eine vorbestimmte Zahl von Verletzungen vorliegt, die nächste Messzeit um den Faktor F verlängert wird,

– anderseits geprüft wird, ob eine bestimmte Anzahl $Z_2 < Z_3$ von Resultaten einer verschärften Nullbedingung genügt,

– und falls die vorbestimmte Zahl $Z_1$ von Verletzungen nicht vorliegt, die Zahl $Z_2$ von Erfüllungen hingegen vorliegt, die nächste Messzeit wiederum um den Faktor F verkürzt wird.

6. Verfahren zu Betrieb eines Messgerätes für Kräfte und Massen nach Patentansprüchen 4 und 5, dadurch gekennzeichnet, das

– zwischen die Operation (404) und (425) eine zusätzliche Operation (414) eingefügt ist, die überprüft, ob die kritische Zeit $t_{krit}$ bereits überschritten ist und falls dies zutrifft, der Fortgang des Verfahrens direkt bis Operation (406) aufgenommen wird, andernfalls die Operation (425) und die ihr folgenden zum Zuge kommen,

– zwischen die Operation (410) und (411) zwei Operationen (418,420) eingefügt sind, wobei die Operation (418) prüft, ob die Uhr (207) läuft, und das Verfahren im bejahenden Fall an Operation (411) verweist, die Uhr (207) hingegen in Gang setzt, wenn sie nicht läuft,

– im auf Operation (401) zurückverweisenden Zweig des Verfahrens bei Operation (410) zwei Operationen (423,424) eingefügt sind, wobei Operation (423) wiederum prüft, ob die Uhr (207) läuft und sie im bejahenden Fall anhält und auf Null zurücksetzt, andernfalls das Verfahren zur Operation (401) zurückverweist,

– zwischen die Operation (408) und (410) eine Operation (404) eingefügt ist, die in elf Verfahrensschritte (Operationen 501-511) unterteilt ist, wo

– Operation (501) überprüft, ob die kritische Zeit $t_{krit}$ schon erreicht ist, im verneinenden Fall das Verfahren an Operation (410) verweist, im bejahenden an Operation (502),

– Operation (502) das Resultat $R(d_j)$ auf Erfüllen der gelockerten Nullbedingung überprüft, das Verfahren bei Nichterfüllen an Operation (511) verweist, bei Erfüllen hingegen an Operation (503),

– Operation (503) das aktuelle Resultat R(m) in den Schiebespeicher (206) einliest,

– Operation (504) die Zahl $Z_1$ feststellt,

– Operation (505) die Zahl $Z_2$ feststellt,

– Operation (506) die Gesamtzahl $Z_3$ der im Schiebespeicher (206) befindlichen Resultate R(m) ermittelt,

– Operation (507) feststellt, ob gleichzeitig $Z_1$ und $Z_3$ die vorbestimmten Zahlen erreichen oder überschreiten und im bejahenden Fall das Verfahren auf Operation (508), im verneinenden an Operation (509) verweist,

– Operation (508) die Messzeit den Faktor F verlängert,

– Operation (509) feststellt, ob gleichzeitig $Z_2$ und $Z_3$ die vorbestimmten Zahlen erreichen oder überschreiten und im bejahenden Falle das Verfahren auf Operation (510), im verneinenden Falle auf Operation (410) verweist,

– Operation (510) die Messzeit im den Faktor F verkürzt,

– Operation (511) den Schiebespeicher leert und reinitialisiert

– die Operationen (508,510,511) das Verfahren bedingungslos an die Operation (410) verweisen.

7. Verfahren zum Betrieb eines Messgerätes für Kräfte und Massen nach Patentanspruch 5, dadurch gekennzeichnet, dass Z = 3, Z = 7, und Z = 10

8. Verfahren zum Betrieb eines Messgerätes für Kräfte und Massen nach Patentanspruch 5 , dadurch gekennzeichnet, dass die gelockerte Nullbedingung $|R(d_j)| \leq 3.d_j$ lautet,

9. Verfahren zum Betrieb eines Messgerätes für Kräfte und Massen nach Patentanspruch 5, dadurch gekennzeichnet, dass die verschärfte Nullbedingung $|R(d_j)| \leq d_j/4$ lautet,

10. Verfahren zum Betrieb eines Messgerätes für Kräfte und Massen nach Patentanspruch 5, dadurch gekennzeichnet, dass der Faktor F eine Zahl zwischen 2 und 10 ist.

11. Verfahren zum Betrieb eines Messgerätes für Kräfte und Massen nach Patentanspruch 1, dadurch gekennzeichnet, dass folgende Lastbereiche $L_j$, Rechenstufen m und Anzeigestufen $d_j$ vorkommen und einander zugeordnet sind:

| Lastbereich $L_j$ (kg) | Interne Rechenstufe m (g) | Anzeigestufe $d_j$ (g) |
|---|---|---|
| 0 : 1 | 0.1 | 1 |
| 1 : 2 | 0.1 | 2 |
| 2 : 5 | 0.1 | 5 |
| 5 : 10 | 0.1 | 10 |
| 10 : 20 | 0.1 | 20 |
| 20 : 50 | 0.1 | 50 |
| 50 : 100 | 0.1 | 100 |

12. Messgerät zur Durchführung des Verfahrens nach einem der Ansprüche 1 bis 11 mit numerischem Auswertegerät zum Messen von Kräften und Massen, welches mehrere Messbereiche und eine automatische Nullpunktskorrektur aufweist, gegliedert in ein Messteil (1), das einen Kraftsensor (15) enthält, und einen Rechner (2) mit Anzeigevorrichtung (3), wobei der Kraftsensor (15) mit dem Rechner (2) durch ein Mehrfachkabel (4) verbunden ist, dadurch gekennzeichnet, dass der Rechner (2)folgende Elemente enthält:

– Ein Element (200) zur Speicherung des Steuerprogramms des Rechners (2) und zu seiner Steuerung,

– eine arithmetische Einheit(201) zur Ausführung der logischen und arithmetischen Operationen,

– einen Nullwertspeicher (202) zur Bildung der Differenz aufeinanderfolgend ermittelter Nullwerte und zur Speicherung des um die Differenz korrigierten neuesten Nullwertes,

– einen Speicher (203) zur Speicherung einer Liste aller vorgesehenen Anzeigestufen $d_j$,

– ein Element (204) zur Bildung des Resultates aus den vom Kraftsensor (15) übermittelten Signalen und zur Bildung des um den Inhalt des Nullwertspeichers (202) verminderten Resultates R(m) in Rechenstufen m,

– einen Speicher (205) zur Speicherung einer Liste aller vorgesehenen, jeweils einen Messbereich begrenzenden, Maximallasten $L_j$,

– einen Speicher (209) zur Speicherung von Steuerprogrammen peripherer Anschlussgeräte,

und dadurch, dass die genannten Elemente (200 bis 205, 209) durch eine Steuer- und Datenlinie (210) mit dem Element (200) verbunden sind zur Durchführung des Verfahrens in organisiertem Zusammenwirken mit den Elementen (200 bis 205, 209).

13. Messgerät nach Patentanspruch 2, dadurch gekennzeichnet, dass das Element (204) zur Linearisierung der vom Kraftsensor (15) übermittelten Signale eingerichtet ist,

14. Messgerätes nach Patentanspruch 12, dadurch gekennzeichnet, dass das Element (204) zur Temperaturkompensation der vom Kraftsensor (15) übermitteln Signale eingerichtet ist,

15. Messgerät nach Patentanspruch 12, dadurch gekennzeichnet, dass es zusätzlich folgende Elemente aufweist:

– einen Schiebespeicher (206) zur Speicherung einer Anzahl von Resultaten R(m) im Nullbereich,

– eine Uhr (207) zur Messung einer ab einem bestimmten im Verfahren definierten Zeitpunkt verstrichenen Zeit t,

– einen Festspeicher (208) zur Speicherung einer kritischen Zeit $t_{krit}$, und dass die Elemente (206 bis 208) ebenfalls über die Steuer- und Datenlinie (210) mit dem Element (200) verbunden sind.

16. Messgerät nach Patentanspruch 15, dadurch gekennzeichnet, dass der Schiebespeicher (206) eine Kapazität von zehn Resultaten aufweist.

## Claims

1. A method for the operation of a measuring instrument for forces and masses with a numerical evaluation instrument, which has several measuring ranges and an automatic zero point correction, in which the measuring instrument is always put through identical evaluation stages m, but through indicating stages $d_j$ dependent on the measuring range, characterised in that

– in a first operation (401) the signals of the force sensor (15) are worked in evaluation stages m to a result R(m) which is reduced by the content of the zero value memory (202),

– in a subsequent operation (402) this result is assigned to the associated incicating stage $d_j$, corresponding to the load range $L_j$,

– with the presence of a result R(m) different from zero, this is represented in the associated indicating stage $d_j$,

– after partial relief of load of the measuring instrument, the roughest indicating stage $d_j$ which is reached is retained,

– with the presence of a result R(m) which falls into a zero range, this result R(m) is interpreted as zero and the zero value memory (202) is updated through this result R(m),

– the precision of the zero display is determined by the extent of the difference of successive results $|R(m)_k - R(m)_{k-1}|$ falling in the zero range.

2. A method for the operation of a measuring instrument for forces and masses according to Claim 1, characterised in that

– before the first measurement, the finest indicating stage is initialised as the one which is valid for the time being,

– a subsequent operation (402), the true indicating stage $d_w$ is established as the smallest possible one, which satisfies the relationship:

$d_w \cong R(m)/1000$, in which the $d_w$ is taken from the list of $d_j$ stored in the memory (203),

– an operation (403) forms the difference from the actual (k) and the (k-1) measurement values preceding it and therefrom determines the smallest possible $d_s$, which satisfies the relationship $d_s \cong |R(m)_k - R(m)_{k-1}|$, in which the $d_s$ is taken from the list $d_j$ stored in the memory (203),

– in a subsequent operation (404), checking is carried out as to whether $d_w > d_j$, whereupon, if this is the case, in an operation (405) a new $d_j$ is defined, which follows from the relationship $d_j = d_w$, and both if this is the case and also if this is not the case, the method continues with an operation (406),

– in the operation (406), the condition of rest $d_s > d_j/2$ is checked, whereupon, in accordance with an operation (407), information is produced indicating the prevailing unrest, any peripheral processing of the result is suppressed and both on passing and also on failing the condition of rest of operation (406) the result $R(d_j)$ is represented in an operation (408),

– a subsequent operation (410) checks the represented result $R(d_j)$ in indicating stages $d_j$ as to whether it is zero and if not, with operation (401) subjects the next measurement to the process, but if in the affirmative, checking is carried out in an operation (411), as to whether $d_w < d_j$, and if this is correct, in an operation (421) a new indicating stage is defined according to the relationship $d_j = 10 \cdot d_s$, but if $d_w \cong d$, in an operation (412) the unrest of the measuring instrument is examined once again,- here according to the relationship $d_s < d_{jmax}/2$ - in which, in the affirmative, the method continues at the same point, as after operation (421), in the negative, with operation (401), the next measurement is subjected to the process,

– an operation (422), after the operation (421) has been carried out and after the rest check of operation (412) has been successfully carried out, passes the result R(m), representing the new zero value, to the zero value memory (202) for further processing, whereupon, with operation (401) the next measurement is subjected to the process.

3. A method for the operation of a measuring instrument for forces and masses according to Claim 1, characterised in that the indicating stage $d_j$, selected according to the method for the result $R(d_j)$ in the zero range, is again made rough, when the result exceeds the limits of the actual zero range given by $d_j/2$.

4. A method for the operation of a measuring instrument for forces and masses according to Claim 3, characterised in that

– in the course of the method, additional operations (425, 415, 416, 417) are undertaken, in which these only come into play when it is established in the operation (404) that $d_w \leqq d_j$,

– the operation (425) checks whether the result $R(m) \leqq d_{jmax}/2$, i.e. whether it lies in the zero range at all, and if not, refers the method to operation (406), but if so, to operation (415),

– the operation (415) checks the result as to whether the zero condition of the actual zero range $|R(m) \leqq d_j/2|$ is correct, and if in the affirmative, the method is continued with operation (416), if in the negative, in operation (416) the indicating stage is made more rough by one stage, then the operation (417) examines whether the roughest indicating stage is already active; if not, the examination of operation (415) is carried out again, until either operation (415) branches to operation (406), or the roughest indicating stage has become active, whereupon operation (417) likewise refers to operation (406).

5. A method for the operation of a measuring instrument for forces and masses according to Claim 3, characterised in that

– after the elapse of a pre-set and stored time $t_{krit}$ a preselected number $Z_3$ of successive last results, which fulfil a relaxed zero condition, are checked as to whether a particular number $Z_1 < Z_3$ of them has failed to meet the original zero condition, whereupon then, when a predetermined number of failures is present, the next measurement time is extended by the factor F,

– on the other hand, checking is carried out as to whether a particular number $Z_2 < Z_3$ of results satisfies an intensified zero condition,

– and if the predetermined number $Z_1$ of failures is not present, the number $Z_2$ of fulfilled conditions is, however, present, the next measurement time is in turn shortened by the factor F.

6. A method for the operation of a measuring instrument for forces and masses according to Claims 4 and 5, characterised in that

– between the operation (404) and (425) an additional operation (414) is included, which checks whether the critical time $t_{krit}$ has already been exceeded and if this is so, the method is continued directly up to operation (406), otherwise, the operation (425) and those following it come into play,

– between the operation (410) and (411) two operations (418, 420) are included, in which the operation (418) checks whether the clock (207) is running, and if in the affirmative refers the method to operation (411), but sets the clock (207) working, if it is not running,

– in the branch of the method referring back to operation (401) at operation (410) two operations (423, 424) are included, in which operation (423) in turn checks whether the clock (207) is running and, if in the affirmative, stops it and resets it to zero, otherwise refers the method back to operation (401),

– between the operation (408) and (410) an operation (409) is included, which is subdivided into eleven process steps (operations 501-511), in which

– operation (501) checks whether the critical time $t_{krit}$ has already been reached, if not, refers the method to operation (410), if in the affirmative, to operation (502),

– operation (502) checks the result $R(d_j)$ as to whether the relaxed zero condition has been fulfilled, refers the method to operation (511) if not fulfilled, and to operation (503) if fulfilled,

– operation (503) reads the actual result R(m) into the shift register (206),

– operation (504) establishes the number $Z_1$,

– operation (506) establishes the number $Z_2$,

– operation (506) determines the total number $Z_3$ of the results R(m) found in the shift register (206),

– operation (507) establishes whether at the same time $Z_1$ and $Z_3$ reach or exceed the predetermined numbers and in the affirmative refers the method to operation (508), in the negative, refers to operation (509),

– operation (508) extends the measurement time by the factor F,

– operation (509) establishes whether at the same time $Z_2$ and $Z_3$ reach or exceed the predetermined numbers and in the affirmative, refers the method to operation (510), in the negative, refers to operation (410),

– operation (510) shortens the measurement time by the factor F,

– operation (511) empties the shift register and reinitialises it,

– the operations (508, 510, 511) refer the method without condition to the operation (410).

7. A method for the operation of a measuring instrument for forces and masses according to Claim 5, characterised in that Z = 3, Z = 7, and Z = 10.

8. A method for the operation of a measuring instrument for forces and masses according to Claim 5, characterised in that the relaxed zero condition is $|R(d_j)| \leqq 3.d_j$.

9. A method for the operation of a measuring instrument for forces and masses according to Claim 5, characterised in that the intensified zero condition is $|R(d_j)| \leqq d_j/4$.

10. A method for the operation of a measuring instrument for forces and masses according to Claim 5, characterised in that the factor F is a number between 2 and 10.

11. A method for the operation of a measuring instrument for forces and masses according to Claim 7, characterised in that the following load ranges $L_j$, evaluation stages m and indicating stages $d_j$ occur and are associated with each other:

| Load range | Internal evaluation stage | Indicating stage |
|---|---|---|
| $L_j$ (kg) | m (g) | $d_j$ (g) |
| 0 : 1 | 0.1 | 1 |
| 1 : 2 | 0.1 | 2 |
| 2 : 5 | 0.1 | 5 |
| 5 : 10 | 0.1 | 10 |
| 10 : 20 | 0.1 | 20 |
| 20 : 50 | 0.1 | 50 |
| 50 :100 | 0.1 | 100 |

12. A measuring instrument to carry out the method according to one of Claims 1 to 11, with a numerical evaluation instrument for measuring forces and masses, which has several measuring ranges and an automatic zero point correction, arranged into a measuring part (1) which contains a force sensor (15), and a computer (2) with display device (3), in which the force sensor (15) is connected with the computer (2) through a multiple cable (4), characterised in that the computer (2) contains the following elements:
– An element (200) for the storage of the control program of the computer (2) and for its control,
– an arithmetic unit (201) to perform the logical and arithmetical operations,
– a zero value memory (202) to form the difference of successively determined zero values and for the storage of the newest zero value corrected by the difference,
– a memory (203) for the storage of a list of all the indicating stages $d_j$ which are provided,
– an element (204) for the formation of the result from the signals transmitted from the force sensor (15) and for the formation of the result R(m), reduced by the content of the zero value memory (202) in evaluation stages m,
– a memory (205) for the storage of a list of all the maximum loads $L_j$ which are provided, in each case delimiting a measurement range,
– a memory (209) for the storage of control programs of peripheral connecting equipment,
and in that the said elements (200 to 205, 209) are connected through a control- and data line (210) with the element (200) to carry out the method in organised cooperation with the elements (200 to 205, 209).

13. A measuring instrument according to Claim 12, characterised in that the element (204) is arranged for the linearisation of the signals transmitted from the force sensor (15).

14. A measuring instrument according to Claim 12, characterised in that the element (204) is arranged for the temperature compensation of the signals transmitted from the force sensor (15).

15. A measuring instrument according to Claim 12, characterised in that it additionally has the following elements:
– a shift register (206) for the storage of a number of results R(m) in the zero range,
– a clock (207) for the measurement of a time t, elapsed from a particular point in time defined in the method,
– a permanent memory (208) for the storage of a critical time $t_{krit}$,
and in that the elements (206 to 208) are likewise connected with the element (200) via the control- and data line (210).

16. A measuring instrument according to Claim 15, characterised in that the shift register (206) has a capacity of ten results.

**Revendications**

1. Procédé d'utilisation d'un appareil de mesure des forces et des masses avec appareil de traitement numérique, qui présente plusieurs plages de mesure et une correction automatique du point zéro, dans lequel l'appareil de mesure effectue toujours les calculs en les mêmes unités m, mais les indique sur le visuel en unités $d_j$ fonction de la plage de mesures, caractérisé par le fait que

– dans une première opération (401) les signaux du détecteur de force (15) sont traités pour donner un résultat R(m), exprimé en unités en lesquelles le résultat est calculé, diminué du contenu de la mémoire (202) des valeurs zéro,

– dans une opération suivante (402), on fait correspondre ce résultat à l'unité correspondante $d_j$ d'indication sur le visuel, en fonction de la plage de charges $L_j$,

– en présence d'un résultat R(m) différent de zéro, ce résultat est exprimé en l'unité correspondante $d_j$ d'indication du résultat sur le visuel,

– après décharge partielle de l'appareil de mesure, la plus grossière atteinte des unités $d_j$ d'indication du résultat sur le visuel est conservée,

– en présence d'un résultat R(m) qui tombe dans un domaine de valeur zéro, ce résultat R(m) est interprété comme une valeur zéro et la mémoire des valeurs zéro (202) est actualisée par ce résultat R(m),

– la précision avec laquelle est indiquée sur le visuel la valeur zéro est déterminée par la grandeur de la différence des résultats successifs, tombant dans le domaine de la valeur zéro $|R(m)_k - R(m)_{k-1}|$.

2. Procédé d'utilisation d'un appareil de mesure des forces et des masses selon la revendication 1, caractérisé par le fait que,

– avant la première mesure, la plus petite des unités en lesquelles peut être exprimé le résultat sur le visuel est initialisée comme étant la valeur provisoirement valable.

– dans une opération suivante, (402), l'unité vraie $d_w$, dans laquelle le résultat sera indiqué sur le visuel, est déterminée comme étant la plus petite possible qui satisfait la condition $d_w \geqq R(m)/1000$, où la valeur $d_w$ est prise dans la liste des valeurs $d_j$ mémorisée dans la mémoire (203).

– une opération (403) forme la différence entre la valeur de mesure actuelle (k) et celle (k-1) qui précède celle-ci et, à partir de cette différence, détermine la valeur $d_s$ la plus petite possible qui satisfait la condition: $d_s \geqq |R(m)_k - R(m)_{k-1}|$, où la valeur $d_s$ est prise dans la liste $d_j$ mémorisée dans la mémoire (203).

– dans une opération suivante (404), le programme contrôle si $d_w > d_j$, après quoi, si c'est le cas, dans une opération (405), est définie une nouvelle valeur $d_j$ qui résulte de la relation $d_j = d_w$ et, aussi bien si c'est le cas que si ce n'est pas le cas, le processus se poursuit par l'opération (406);

– dans l'opération (406), le programme contrôle la condition de repos $d_s > d_j/2$, après quoi, selon une opération (407), le programme produit une information informant que règne une situation de non-repos, interdit le traitement du résultat par des périphériques éventuels et, aussi bien dans le cas du respect que dans le cas de la violation de la condition de repos par l'opération (406), le résultat R($d_j$) est exprimé dans une opération (408).

– une opération suivante (410) contrôle le résultat R($d_j$) exprimé en unités $d_j$, pour savoir s'il est zéro et, si ce n'est pas le cas, l'opération (401) soumet au processus la mesure suivante tandis que, si c'est le cas, une opération (411) contrôle si $d_w < d_j$ et, si c'est le cas, une opération (421) définit une nouvelle unité en laquelle le résultat sera indiqué sur le visuel, d'après la relation $d_j = 10 \cdot d_s$, mais si l'on a $d_w \geqq d_j$, une opération (412) étudie à nouveau l'état de non-repos de l'appareil de mesure - ici, d'après la relation $d_s < d_{jmax}/2$ - étant précisé que si c'est le cas, le procédé se poursuit au même endroit qu'après l'opération (421), et que si ce n'est pas le cas l'opération (401) soumet au processus la mesure suivante:

– après exécution de l'opération (421) et contrôle, par l'opération (412), de l'état de repos durable, une opération (422) envoie dans la mémoire de valeur zéro (202), pour la poursuite du traitement, le résultat R(m) représentant la nouvelle valeur zéro, après quoi l'opération (401) soumet au processus la mesure suivante.

3. Procédé d'utilisation d'un appareil de mesure des forces et des masses selon la revendication 1, caractérisé par le fait que l'unité $d_j$ choisie, en fonction du processus, pour exprimer le résultat R($d_j$) dans le domaine de la valeur zéro devient à nouveau une valeur plus grossière si le résultat dépasse, par valeur supérieure, les limites du domaine actuel de la valeur zéro donné par $d_j/2$.

4. Procédé d'utilisation d'un appareil de mesure des forces et des masses selon la revendication 3, caractérisé par le fait que:

– au cours du déroulement du processus, il est procédé à des opérations supplémentaires (425, 415, 416, 417), étant précisé que ces opérations ne se présentent que s'il a été déterminé dans l'opération (404) que $d_w \leqq d_j$,

– l'opération (425) contrôle si le résultat donne $|R(m) \leqq d_{jmax}/2|$, c'est-à-dire si ce résultat se situe véritablement dans le domaine de la valeur zéro, et, dans le cas contraire, le procédé renvoie à l'opération (406) et par contre, si c'est le cas, il renvoie à l'opération (415),

– l'opération (415) contrôle le résultat pour savoir si la condition de valeur zéro du domaine de valeur zéro actuel satisfait $|R(M) \leqq d_j/2|$ et, si c'est le cas, le procédé se poursuit à l'opération (416) et, si ce n'est pas le cas, à l'opération (416) l'unité d'indication du résultat sur le visuel passe à l'unité immédiatement plus grossière, puis l'opération (417) recherche si cette unité immédiatement plus grossière est déjà active et si ce n'est pas le cas il est à nouveau procédé au contrôle de l'opération (417) jusqu'à ce que soit l'opération (415) branche sur l'opération (406), soit l'unité plus grossière soit devenue active, après quoi l'opération (417) renvoie également à l'opération (406).

5. Procédé d'utilisation d'un appareil de mesure des forces des masses selon la revendication 3, caractérisé par le fait que

– après déroulement d'un temps prédéterminé et mémorisé $t_{crit}$, un nombre présélectionné $Z_3$ des derniers résultats successifs, qui remplissent une condition de valeur zéro moins stricte, sont contrôlés sur la question de savoir si un nombre déterminé $Z_1 < Z_3$ d'entre eux a violé la condition de valeur zéro d'origine, après quoi; s'il apparaît un nombre prédéterminé de violations, le temps de mesure suivant est prolongé du facteur F,

– par ailleurs il est contrôlé si un nombre déterminé $Z_2 < Z_3$ de résultats satisfait une condition de valeur zéro plus stricte,

– et dans le cas où le nombre prédéterminé $Z_1$ de violations n'apparaît pas, et si par contre il apparaît le nombre $Z_2$ de fois où la condition a été remplie, le temps de mesure suivant est à nouveau raccourci du facteur F.

6. Procédé d'utilisation d'un appareil de mesure des forces et des masses selon les revendications 4 et 5, caractérisé par le fait que

– entre les opérations (404) et (425), est insérée une opération supplémentaire (414) qui contrôle si le temps critique $t_{crit}$ a déjà été dépassé par valeur supérieure et, si c'est le cas, la poursuite du processus se fait directement jusqu'à l'opération (406), et, si ce n'est pas le cas, ce sont les opérations (425) et les suivantes qui interviennent,

– entre les opérations (410) et (411) sont insérées deux opérations (418,420), étant précisé que l'opération (418) contrôle si l'horloge (207)fonctionne que si c'est le cas le processus renvoie à l'opération (411) tandis que si l'horloge ne fonctionne pas elle est mise en marche,

– dans la branche du procédé qui renvoie à l'opération (401), lors de l'opération (410), deux opérations (423,424) sont insérées, et étant précisé que l'opération (423) contrôle à nouveau si l'horloge (207)fonctionne et, si c'est le cas, l'arrête et la ramène au zéro, tandis que dans le cas contraire, le procédé renvoie à l'opération (401),

– entre les opérations (408) et (410), est insérée une opération (409) qui est divisée en onze pas de processus (opérations 501-511) où

– l'opération (501) contrôle si le temps critique $t_{crit}$ est déjà atteint, si ce n'est pas le cas, le processus renvoie à l'opération (410) et si c'est le cas, il renvoie à l'opération (502).

– l'opération (502) contrôle si le résultat $R(d_j)$ remplit la condition de valeur zéro moins stricte; si cette condition n'est pas remplie, le procédé renvoie à l'opération (511) et par contre, si elle est remplie, il renvoie à l'opération (503),

– l'opération (503) range le résultat actuel R(m) dans le registre à décalage (206),

– l'opération (504) détermine le nombre $Z_1$,

– l'opération (505) détermine le nombre $Z_2$,

– l'opération (506) établit le nombre total $Z_3$ des résultats R(m) qui se trouvent dans le registre à décalage (206,

– l'opération (507) détermine si, simultanément, $Z_1$ et $Z_3$ atteignent ou dépassent par valeur supérieure les nombres prédéterminés et, si c'est le cas, le procédé renvoie à l'opération (508) et, si ce n'est pas le cas, il renvoie à l'opération (509),

– l'opération (508) prolonge le temps de mesure du facteur F

– l'opération (509) détermine si, simultanément, $Z_2$ et $Z_3$ atteignent ou dépassent, par valeur supérieure, les nombres prédéterminés et, si c'est le cas, le procédé renvoie à l'opération (510) et si ce n'est pas le cas il renvoie à l'opération (410),

– l'opération (510) raccourcit le temps de mesure du facteur F,

– l'opération (511) vide le registre à décalage et le réinitialise,

– les opérations (508,510,511) renvoient sans condition le procédé à l'opération (410).

7. Procédé d'utilisation d'un appareil de mesure des forces et des masses selon la revendication 5, caractérisé par le fait que $Z_1 = 3$, $Z_2 = 7$ et $Z_3 = 10$.

8. Procédé d'utilisation d'un appareil de mesure des forces et des masses selon la revendication 5, caractérisé par le fait que la condition de valeur zéro moins stricte s'énonce $|R(d_j)| \leq 3.d_j$.

9. Procédé d'utilisation d'un appareil de mesure des forces et des masses selon la revendication 5, caractérisé par le fait que la condition de valeur zéro plus stricte s'énonce $|R(d_j)| \leq d_j/4$.

10. Procédé d'utilisation d'un appareil de mesure des forces et des masses selon la revendication 5, caractérisé par le fait que le facteur F est un nombre compris entre 2 et 10.

11. Procédé d'utilisation d'un appareil de mesure des forces et des masses selon la revendication 1, caractérisé par le fait que l'on y trouve les plages de charges $L_j$, les unités m en lesquelles le résultat est calculé et les unités $d_j$ en lesquelles le résultat est indiqué sur le visuel, comme suit et en correspondance les unes avec les autres:

| Plage de charge | Unité interne en laquelle le résultat est calculé | Unité en laquelle le résultat est indiqué sur le visuel |
|---|---|---|
| $L_j$ (kg) | m (g) | $d_j$ (g) |
| 0 : 1 | 0,1 | 1 |
| 1 : 2 | 0,1 | 2 |
| 2 : 5 | 0,1 | 5 |
| 5 : 10 | 0,1 | 10 |
| 10 : 20 | 0,1 | 20 |
| 20 : 50 | 0,1 | 50 |
| 50 : 100 | 0,1 | 100 |

12. Appareil de mesure pour la mise en oeuvre du procédé selon lrune des revendications 1 à 11, avec un appareil de traitement numérique pour la mesure des forces et des masses, appareil qui présente plusieurs plages de mesure et une correction automatique du point zéro, organisé en une partie de mesure (1), qui contient un détecteur de forces (15), et un ordinateur (2) avec un visuel (3), étant précisé que le détecteur de forces (15) est relié à l'ordinateur (2) par un câble multiple (4), appareil caractérisé par le fait que l'ordinateur (2) contient les éléments suivants:

– un élément (200) pour mémoriser le programme de commande de l'ordinateur (2) et pour le commander,
– une unité arithmétique (201) pour exécuter les opérations logiques et arithmétiques,
– une mémoire des valeurs zéro (202) pour former la différence des valeurs zéro établies successivement et pour mémoriser la valeur zéro la plus récente corrigée de la différence,
– une mémoire (203) pour mémoriser une liste de toutes les unités prévues $d_j$ en lesquelles le résultat peut être indiqué sur le visuel,
– un élément (204) pour former le résultat à partir des signaux émis par le détecteur de force (15) et pour former le résultat R(m) diminué du contenu de la mémoire des valeurs zéro (202) et exprimé en unités m en lesquelles le résultat est calculé.
– une mémoire (250) pour mémoriser une liste de toutes les charges maximales prévues $L_j$ limitant chacune une plage de mesures.
– une mémoire (209) pour mémoriser les programmes de commande des appareils périphériques,
et par le fait que les éléments mentionnés (200 à 205, 209) sont reliés à l'élément (200) par une ligne de commande et de données (210) pour la mise en oeuvre du procédé en collaboration organisée avec les éléments (200 à 205, 209).

13. Appareil de mesure selon la revendication 12, caractérisé par le fait que l'élément (204) est conçu pour linéariser les signaux émis par le détecteur de forces (15).

14. Appareil de mesure selon la revendication 12, caractérisé par le fait que l'élément (204) est conçu pour procéder à une compensation de température des signaux émis par le détecteur de forces (15).

15. Appareil de mesure selon la revendication 12, caractérisé par le fait qu'il présente en outre, les éléments suivants:

– un registre à décalage (206) pour y ranger un certain nombre de résultats R(m) dans le domaine des valeurs zéro.
– une horloge (207) pour mesurer un temps t qui s'est écoulé depuis un instant déterminé, défini dans le procédé,
– une mémoire fixe (208) pour mémoriser un temps critique $t_{crit}$, appareil caractérisé par le fait que les éléments (206 à 208) sont également reliés à l'élément (200) par l'intermédiaire de la ligne de commande et de données (210).

16. Appareil de mesure selon la revendication 15, caractérisé par le fait que le registre à décalage (206) présente une capacité de dix résultats.

# Fig. 1

**Fig. 1**

R(m)

$R_0$

17

$R_n$

$t_s$

t

a)

R(m)

18

b)

$R_n$

$-R_n$

$\triangle R$

t

$t_{s1}$ $t_{s2}$

# Fig. 2

Fig.3

**401** R(m)

**402** $d_w$

**403** $d_s$

**404** $d_w > d_j$ — ja → **405** $d_j = d_w$

nein

**406** $d_s > d_j/2$ — ja → **407** "M" → Peripherie

nein

**408** R($d_j$)

**410** R($d_j$)=0 — nein →

ja

**411** $d_w < d_j$ — nein → **412** $d_s < d_{jmax}/2$ — nein →

ja                                    ja

**421** $d_j = 10 \cdot d_s$          **422** R(m) → Speicher

# Fig.4

**Fig. 5**

| 200 Programm | 4 | 201 ar.Einheit |
|---|---|---|
| 202 Nullwert-Speicher | | 203 $d_j$-Liste |
| 204 R(m) | | 205 $L_j$-Liste |
| 210 | | 209 Per.-Progr. |

**Fig. 8**

| 200 Programm | 4 | 201 ar.Einheit |
|---|---|---|
| 202 Nullwert-Speicher | | 203 $d_j$-Liste |
| 204 R(m) | | 205 $L_j$-Liste |
| 206 Schiebe-Speicher | 210 | 207 Uhr (t) |
| 208 $t_{krit}$ | | 209 Per.-Progr. |

**Fig. 6**

Anzeigestufen in kg

0.1  0.02  0.01  0.005  0.002  0.001

EP 0 407 503 B1

**401** — R(m)

**402** — $d_w$

**403** — $d_s$

**404** — $d_w > d_j$ — ja — **405** — $d_j = d_w$

nein

**425** — $|R(m)| \leq d_{jmax}/2$ — nein

ja

**415** — $|R(m)| \leq d_j /2$ — nein — $d_j = d_{j+1}$ — **416**

ja

**417** — $d_j = d_{jmax}$ — nein

ja

**406** — $d_s > d_j/2$ — ja — "M" — **407** — Peripherie

nein

**408** — R($d_j$)

**410** — $\overline{R(d_j)} = 0$ — nein

ja

**411** — $d_w \leq d_j$ — nein

ja

**412** — $d_s < d_{jmax}/2$ — nein

ja

**421** — $d_j = 10 \cdot d_s$

**422** — R(m) → Speicher

# Fig. 7

**401** R(m)

**402** $d_w$

**403** $d_s$

**404** $d_w > d_j$ — ja → **405** $d_j = d_w$

nein

**414** $t < t_{krit}$

nein

ja

**425** $|R(m)| \leq d_{jmax}/2$

nein

ja

**415** $|R(m)| \leq d_j/2$ — nein → **416** $d_j = d_{j+1}$

ja

**417** $d_j = d_{jmax}$ — nein

ja

**406** $d_s > d_j/2$ — ja → **407** "M" → Peripherie

nein

**408** $R(d_j)$

**409** Messzeit

**410** $R(d_j) = 0$ — nein → **423** $t > 0$ — nein

ja                                    ja

**418** $t > 0$                        **424** stop t, reset

ja

nein

**420** start t

**411** $d_w < d_j$ — nein → **412** $d_s < d_{jmax}/2$ — nein

ja                                          ja

**421** $d_j = 10 \cdot d_s$          **422** R(m) → Speicher

## Fig. 9

25

# Fig. 10

501 — $t > t_{krit}$ — nein / ja

502 — $|R(d_j)| \leq 3 \cdot d_j$ — ja / nein

503 — $R(m) \rightarrow$ Schiebespeicher

504 — $z_1$

505 — $z_2$

506 — $\dot{z}_3$

507 — $z_3 \geq 10$ $\quad \dfrac{z_1}{z_3} \geq 0.3$ — ja / nein

508 — verl. Messzeit

509 — $z_3 \geq 10$ $\quad \dfrac{z_2}{z_3} \geq 0.7$ — ja / nein

510 — verk. Messzeit

511 — reinit. Schiebespeicher